# EUROPÄISCHE PATENTSCHRIFT

(11) **EP 0 943 477 B1**
(45) Veröffentlichungstag und Bekanntmachung des Hinweises auf die Patenterteilung: **06.08.2003**
(21) Anmeldenummer: 99105268.9
(22) Anmeldetag: 15.03.1999
(51) Int. Cl.: B60K 15/04

(54) **Kraftstoffbehälterverschluss**
Fuel tank closure
Fermeture pour réservoir de carburant

(30) Priorität: 20.03.1998 DE 19812384
(43) Veröffentlichungstag der Anmeldung: 22.09.1999
(73) Patentinhaber: TEMTEC FAHRZEUGTECHNIK ENTWICKLUNGSGESELLSCHAFT mbH, D-83064 Raubling (DE)
(72) Erfinder: Temmesfeld, Angelika Barbara Maria, 83064 Raubling (DE)
(74) Vertreter: Kehl, Günther, Dipl.-Phys.

(56) Entgegenhaltungen:
- EP-A- 0 602 440
- DE-A- 3 641 274
- DE-A- 4 237 790
- DE-C- 19 532 777

## Beschreibung

Die Erfindung bezieht sich auf einen Kraftstoffbehälterverschluß zur Befestigung auf dem Kraftstoffeinfüllstutzen eines Kraftfahrzeugs, mit einem beweglichen Verschlußteil, das den Zugang in das Innere des Kraftstoffeinfüllstutzens wahlweise öffnet oder schließt, wobei der Kraftstoffbehälterverschluß auch während des Betankens auf dem Mündungsrand des Kraftstoffeinfüllstutzens verbleibt, mit einem Kupplungsteil zur Betätigung des Verschlußteils und mit einem Führungsrohr.

In der nachfolgenden Beschreibung sind die Begriffe "oben" und "unten" so zu verstehen, daß unter "unten" bzw. "nach unten" die Richtung in das Innere (d.h. zum Tank) des durch den Kraftstoffbehälterverschluß zu verschließenden Kraftstoffeinfüllstutzens zu verstehen ist, während unter "oben" bzw. "nach oben" die Gegenrichtung, d.h. die vom Inneren des Einfüllrohres in das Freie führende Axialrichtung gemeint ist.

Ein Kraftstoffbehälterverschluß der eingangs genannten Art ist aus der DE 195 32 777 C1 bekannt. Der bekannte Kraftstoffbehälterverschluß kann während des Betankens auf dem Mündungsrand des Einfüllstutzens verbleiben und gestattet auf diese Weise eine einfache Bedienung, d.h. ein einfaches Öffnen und Schließens des Verschlußteils zum Zwecke der Betankung des Fahrzeugs. Der Fahrer des Kraftfahrzeugs ist von der Aufgabe befreit, den aus dem Einfüllstutzen entfernten Kraftstoffbehälterverschluß während des Tankens aufzubewahren und nach dem Betanken des Fahrzeugs wieder zurückzusetzen. Die Bedienung ist so einfach, daß sie auch von einer automatischen Betankungseinrichtung durchgeführt werden kann. Bei Kraftstoffbehälterverschlüssen, die während der Betankung auf dem Mündungsrand des Einfüllstutzens verbleiben, kann es insbesondere bei der manuellen Betankung mittels Zapfpistole vorkommen, daß die Zapfpistole nicht mehr so tief in den Einfüllstutzen eingeführt werden kann, wie dies bei Verschlüssen möglich ist, die von dem Einfüllstutzen des Kraftfahrzeugs zum Betanken vollständig entfernt werden. Dies bringt die Gefahr mit sich, daß die automatische Endabschaltung der Zapfpistole nicht rechtzeitig anspricht und der Einfüllstutzen beim Betanken überläuft. Ein weiteres Problem stellt beim Betanken die bei vielen Fahrzeugen noch vorgesehene Innenklappe dar, die zum Schutz gegen Betanken mit verbleitem Benzin, das üblicherweise aus einer Zapfpistole mit größerem Durchmesser abgegeben wurde, vorgesehen war (sogenannte Bleifreiklappe). Bei dem bekannten Kraftstoffbehälterverschluß ist als Verschlußteil ein um eine vertikale Achse verschwenkbarer Schwenkschieber vorgesehen. Bei dieser Konstruktion ist zwar eine vergleichsweise niedrige Bauhöhe über dem Mündungsrand möglich, so daß die Zapfpistole unter günstigen Bedingungen noch gerade soweit einführbar sein dürfte, daß ein einigermaßen störungsfreies Betanken möglich sein könnte. Der Schwenkschieber benötigt jedoch in seiner Offenstellung seitlich neben dem Einfüllstutzen viel Platz, der bei vielen Fahrzeugtypen nicht in ausreichendem Maße vorhanden ist. Der Einsatz des bekannten Kraftstoffbehälterverschlusses ist daher nur auf bestimmte Fahrzeutypen beschränkt und erfordert eine gesteigerte Sorgfalt beim Einführen der Zapfpistole. Eine ordnungsgemäße Auslösung der automatischen Endabschaltung ist nicht gesichert.

Aus der DE 42 37 790 A1 ist ein selbstschließender Kraftstoffbehälterverschluß bekannt, der auch während des Betankens auf dem Mündungsrand des Einfüllstutzens verbleiben kann. Das Verschlußteil besteht aus einer nach innen verschwenkbaren Klappe, die von der Zapfpistole gegen die Kraft einer Schließfeder in die Offenstellung gedrückt wird. Auch diese Konstruktion weist über dem Mündungsrand eine nicht zu vernachlässigende Bauhöhe auf, was zu den oben bereits erörterten Problemen führt.

Aus EP-A-0 602 440 ist ein Kraftstoffbehälterverschluß bekannt, bei dem ein Verschlußteil vorgesehen ist, das sich durch Verschwenken um eine zum Einfüllstutzen radial verlaufende Achse aus der Verschlußposition entfernen läßt. Der bekannte Verschluß baut in radialer Richtung äußerst platzsparend, in axialer Richtung weist er jedoch eine nicht vernachlässigbare Bauhöhe auf, die zu den oben bereits erläuterten Problemen führt.

Aus DE 36 41 274 A1 ist ein Einfüllstutzen eines Kraftfahrzeugtanks bekannt, der mit einem Schraubdeckel zu verschließen ist. Dieser muß zum Betanken abgenommen und nach dem Betanken zurückgesetzt werden. Im Innern des Einfüllstutzens ist eine nachrüstbare Betankungssperre, eine sogenannte Bleifreiklappe, angeordnet, die gegen Entfernen gesichert ist.

Der Erfindung liegt daher die Aufgabe zugrunde einen Kraftstoffbehälter der eingangs genannten Art zu schaffen, der auf den Mündungsrand eines Kraftstoffeinfüllstutzens aufgesetzt wird und dort während des Betankungsvorganges verbleiben kann und der trotzdem eine bequeme und vor allem störungsfreie Betankung möglich macht.

Zur Lösung dieses Problems sieht die Erfindung vor, daß der Kraftstoffbehälterverschluß ein Führungsrohr aufweist, das sich in das Innere des Kraftstoffeinfüllstutzens hinein erstreckt. Das Führungsrohr gemäß der Erfindung weist eine solche Länge auf, daß es weit in den Einfüllstutzen hineinreicht und gewissermaßen eine Verlängerung der Zapfpistole darstellt. Es sorgt dafür, daß die Zapfpistole sicher und stabil gehalten bzw. geführt wird, und andererseits auch rechtzeitig auf einen Rückstau im Einfüllstutzen anspricht und die Kraftstoffzufuhr unterbricht. Ferner wird durch das Führungsrohr die Bleifreiklappe in Offenstellung gehalten, so daß die (störungsfreie) Betankung auch bei tiefsitzenden Bleifreiklappen gesichert ist.

Nach einer vorteilhaften Ausführungsform weist das Führungsrohr einen sich in Richtung auf das Innere des Einsatzrohres hin verjüngenden Abschnitt auf. Dieser ist vorzugsweise mit Durchbrüchen versehen, damit die beim Tanken aus dem Tankinneren verdrängten Kraftstoffdämpfe nach außen entweichen können, wo sie von der Betankungseinrichtung aufgesaugt werden können.

Vorteilhafterweise besteht das Führungsrohr zumindest in seinem zylindrischen Abschnitt aus Stahl und weist eine Wandstärke von 0,25 bis 0,8 mm auf. Auf diese Weise kann der geringe zwischen der Zapfpistole und der engsten Stelle des Einfüllkanals verbleibende Ringspalt zur Aufnahme des Führungsrohrs genützt werden. Erstaunlicherweise ist die Steifigkeit des Führungsrohres ausreichend, um die Innenklappe in Offenstellung zu halten.

In diesem Zusammenhang hat sich ein Kraftstoffbehälterverschluß als besonders vorteilhaft erwiesen, bei dem das Verschlußteil im Schließzustand den Rand der Mündung eines Rohrteils bedeckt und mit einer Zwangsführung so geführt ist, daß es beim Öffnen des Kraftstoffbehälterverschlusses in einer ersten Phase des Öffnungsvorgangs in annähernd axialer Richtung des Rohrteiles von der Mündung des Rohrteils abhebt und in einer daran anschließenden zweiten Phase des Öffnungsvorgangs um eine quer zur Längsrichtung des Rohrteils im Bereich des Rohrteils oder dessen axialer Verlängerung liegende Achse gedreht wird, um die Mündung freizugeben, wobei das Verschlußteil mit dem Kupplungsteil gekoppelt ist, über das mittelbar oder unmittelbar die Bewegung des Verschlußteils gesteuert wird. Durch einen einfachen Dreh- oder Ziehvorgang an dem Kupplungsteil wird das Verschlußteil in einer ersten Phase der Öffnungsbewegung in axialer Richtung angehoben und dann in einer zweiten Phase der Öffnungsbewegung verschwenkt, um die Mündung freizugeben. Durch Drehen in der Gegenrichtung oder durch Loslassen des Kupplungsteils wird in umgekehrter Reihenfolge der Kraftstoffbehälterverschluß geschlossen. Die Handhabung ist daher denkbar einfach und kann auch von einer automatischen Betankungseinrichtung bewältigt werden.

Nach einer weiteren vorteilhaften Ausführungsform ist vorgesehen, daß das Kupplungsteil formschlüssig an einen Drehring derart gekoppelt ist, daß es gegen diesen axial verschieblich, jedoch drehfest mit diesem verbunden ist.

In diesem Zusammenhang hat es sich als besonders vorteilhaft erwiesen, wenn der Drehring mit einer Schiebehülse über eine Schraubverbindung derart in Eingriff steht, daß durch Drehen des Drehrings die Schiebehülse in Axialrichtung verschoben wird. Auf diese Weise kann die Drehung des Drehrings in eine reine Axialverschiebung der Schiebehülse umgesetzt werden, wodurch sich eine besonders sichere und gegen Verkantungen und Verklemmungen wenig anfällige Konstruktion zur Betätigung des Verschlußteils ergibt.

Das Verschlußteil, das kappenförmig ausgebildet ist und zwei diametral gegenüberliegende sich in Axialrichtung erstreckende Streben aufweist, ist mit der Schiebehülse über eine Zapfen/Loch-Verbindung verbunden. Das Verschlußteil erfährt somit die axiale (drehungsfreie) Verschiebung der Schiebehülse, bleibt jedoch um die durch die Zapfen/Loch-Verbindung zwischen den Streben und der Schiebehülse definierte Achse, die quer zur Längsachse des Rohrteils liegt, verschwenkbar.

Wenn gemäß einer weiteren vorteilhaften Ausgestaltung der Erfindung die Schiebehülse mit dem Kupplungsteil formschlüssig derart verbunden ist, daß sie in bezug auf das Kupplungsteil in Axialrichtung festgelegt ist, jedoch das Kupplungsteil drehbar gegenüber der Schiebehülse ist, wird erreicht, daß das Kupplungsteil bei Ausübung der Drehbewegung die axiale Verschiebung der Schiebehülse mitmacht. Das Kupplungsteil kann auf diese Weise dazu verwendet werden, im geschlossenen Zustand des Verschlußteils auf dieses in Richtung der Mündung des Rohrteils eine zusätzliche Anpreßkraft auszuüben, um einen sicheren Verschluß zu gewährleisten.

In weiterer vorteilhafter Ausgestaltung der Erfindung umschließen die beiden Streben des Verschlußteils zu beiden Seiten das Rohrteil und die die Öffnungsbewegung des Verschlußteils erzeugende Zwangsführung ist zwischen den Streben und dem Rohrteil, d.h. an der Innenseite der Streben und der Außenseite des Rohrteils in Form einer Kulissenführung ausgebildet.

Eine unter herstellungstechnischen Gesichtspunkten besonders einfache jedoch sehr wirksame Lösung besteht darin, daß die Kulissenführung eine Zapfen/Nut-Führung ist, d.h. daß an einem der beiden Teile ein Zapfen und an dem anderen der beiden Teile eine den Zapfen aufnehmende Nut angeordnet ist.

Es ist dabei durchaus überraschend, daß die Kulissenführung aus lediglich einer einzigen Nut und einem einzigen Zapfen (auf jeder der beiden Seiten des Rohrteils) bestehen kann, während nach dem Stand der Technik zur Erzielung der Schwenkbewegung des Verschlußteils eine weitaus kompliziertere Anordnung bestehend aus mindestens zwei Nuten und zwei Zapfen erforderlich war. Die gemäß der vorteilhaften Ausführungsform erzielte Vereinfachung führt zu einer wesentlichen Vereinfachung beim Zusammenbau des Verschlusses sowie zu einer präziseren Führung und einer erhöhten Funktionssicherheit des Behälterverschlusses. Die Vereinfachung ist dadurch ermöglicht, daß die Schiebehülse eine reine Axialbewegung ausführt und mittels der bereits erwähnten Zapfen/Loch-Verbindung präzise auf die Streben des Verschlußteils überträgt. Das Verschlußteil selbst hat gegenüber der Schiebehülse nur einen Bewegungsfreiheitsgrad, nämlich eine Verschwenkung um die durch die Zapfen/Loch-Verbindung definierte Querachse. Eine Verklemmung des Verschlußteils ist daher so gut wie ausgeschlossen.

Nach einer weiteren vorteilhaften Ausführungsform ist vorgesehen, daß die Nut der Zapfen/Nut-Führung einen in Axialrichtung verlaufenden ersten Nutabschnitt und einen daran anschließenden gekrümmten zweiten Nutabschnitt aufweist, wobei der Zapfen bei geschlossenem Kraftstoffbehälterverschluß und in der ersten Phase der Öffnungsbewegung sich im ersten Nutabschnitt befindet und während der zweiten Phase der Öffnungsbewegung in den zweiten Nutabschnitt einläuft.

In weiterer vorteilhafter Ausgestaltung der Erfindung besteht das Rohrteil aus einem Flanschteil mit einem zylindrischen Abschnitt und einem innerhalb des zylindrischen Abschnitts angeordneten Einsatzrohr, wobei zwischen dem Einsatzrohr und dem das Einsatzrohr umgebenden zylindrischen Abschnitt des Flanschteils eine über den Mündungsrand des so gebildeten Rohrteils vorstehende Lippendichtung angeordnet ist. Die über den Mündungsrand vorstehende, zwischen den beiden Teilen eingespannte umlaufende Lippendichtung stellt die Dichtheit des Verschlußteils in der Schließposition dauerhaft sicher, da sie gegen Beschädigung geschützt ist.

Bei Kraftstoffbehälterverschlüssen, die nachträglich auf den Kraftstoffeinfüllstutzen eines Kraftfahrzeuges montiert werden, ist das Einsatzrohr vorteilhafterweise mit einem Gewinde zum Einschrauben in einen Kraftstoffeinfüllstutzen versehen. Der Kraftstoffbehälterverschluß kann somit wie ein gewöhnlicher Tankdeckel auf den Kraftstoffeinfüllstutzen eines Fahrzeugs gesetzt und dort durch Anschrauben befestigt werden.

Für Kraftstoffeinfüllstutzen, die für die Aufnahme eines Tankdeckel mit Bajonettverschluß vorgesehen sind, ist gemäß einer alternativen Ausführungsform der Erfindung das Einsatzrohr mit einem Paar Fanghaken versehen, die in bekannter Weise eine Befestigung auf dem Kraftstoffeinfüllstutzen nach Art eines Bajonettverschlusses ermöglichen.

Nach einer weiteren vorteilhaften Ausführungsform ist vorgesehen, daß der Drehring gegenüber dem Flanschteil axial festgelegt, jedoch drehbar in bezug auf dieses gelagert ist. Dadurch ist gewährleistet, daß der Drehring ausschließlich eine Drehbewegung ausführen kann und von der Axialbewegung der anderen Teile vollkommen entkoppelt ist.

In ähnlicher Weise kann das Flanschteil dazu dienen, die Schiebehülse axial verschieblich, jedoch unverdrehbar gegenüber dem Flanschteil zu lagern. Damit ist wiederum gewährleistet, daß die Schiebehülse gegenüber dem ortsfesten unbeweglichen Flanschteil nur eine Axialbewegung, jedoch keine Drehbewegung ausführen kann.

Gemäß einer vorteilhaften Ausführungsform der Erfindung ist ein Stößelrohr vorgesehen, das an die Bewegung des Verschlußteils gekoppelt ist. Das Stößelrohr bewegt sich beim Öffnen des Kraftstoffbehälterverschlusses axial in Richtung auf den Mündungsrand und wird beim Schließen des Kraftstoffbehälterverschlusses durch das Verschlußteil in Richtung auf das Innere des Kraftstoffeinfüllrohres gedrückt. Durch das Stößelrohr kann auf diese Weise ein Ventil oder ein elektrischer Schalter betätigt werden, wodurch Verbindungen hergestellt und/oder unterbrochen werden. Beispielsweise sind manche Fahrzeugtypen mit einem sogenannten OBVR-System (OnBoard Vapour Recovery-System) ausgerüstet, d.h. mit einem Aktivkohlefilter, der während des Betankens die aus dem Kraftstoffbehälter verdrängten Gasdämpfe aufnimmt und nach dem Betanken an den Motor zur Verbrennung abgibt. Bei solchen Systemen muß der Gasraum des Kraftstoffbehälters während des Betankens mit dem Aktivkohlefilter verbunden und danach wieder getrennt werden. Als weiteres Anwendungsbeispiel für das Stößelrohr ist ein Ventil zu nennen, das den Kraftstoffausgleichsbehälter des Fahrzeugs während des Betankens abkoppelt.

Bei einer vorteilhaften Ausführungsform der Erfindung ist es möglich, das Öffnen und Schließen (zusätzlich) durch ein Ziehen am Kupplungsteil in axialer Richtung zu bewerkstelligen. Zu diesem Zweck ist vorgesehen, daß die Schiebehülse axial verschieblich gelagert ist und zusammen mit dem Kupplungsteil gegen die Kraft einer Vorspannfeder verschiebbar ist.

Nach einer weiteren vorteilhaften Ausführungsform ist vorgesehen, daß in der Seitenwand des Rohrteils ein Überdruck/Unterdruckventil angeordnet ist.

Die Erfindung wird im folgenden an Hand der in den Figuren schematisch dargestellten Ausführungsbeispiele näher erläutert. Es zeigt:
- Figur 1:: Eine perspektivische Explosionsdarstellung des Kraftstoffbehälterverschlusses gemäß der Erfindung entsprechend einer ersten Ausführungsform.
- Figur 2:: Den zusammengesetzten Kraftstoffbehälterverschluß aus Figur 1 im Längsschnitt.
- Figur 3:: Einen Kraftstoffbehälterverschluß gemäß einer weiteren Ausführungsform im Längsschnitt.
- Figur 4:: Eine perspektivische Explosionsdarstellung der Teile des Kraftstoffbehälterverschlusses der Figur 3.
- Figur 5:: Einen Längsschnitt des Kraftstoffbehälterverschlusses der Figuren 3 und 4 in geöffnetem Zustand und mit eingeführter Zapfpistole.
- Figur 6:: Einen Kraftstoffbehälterverschluß gemäß einer weiteren Ausführungsform im Längsschnitt.

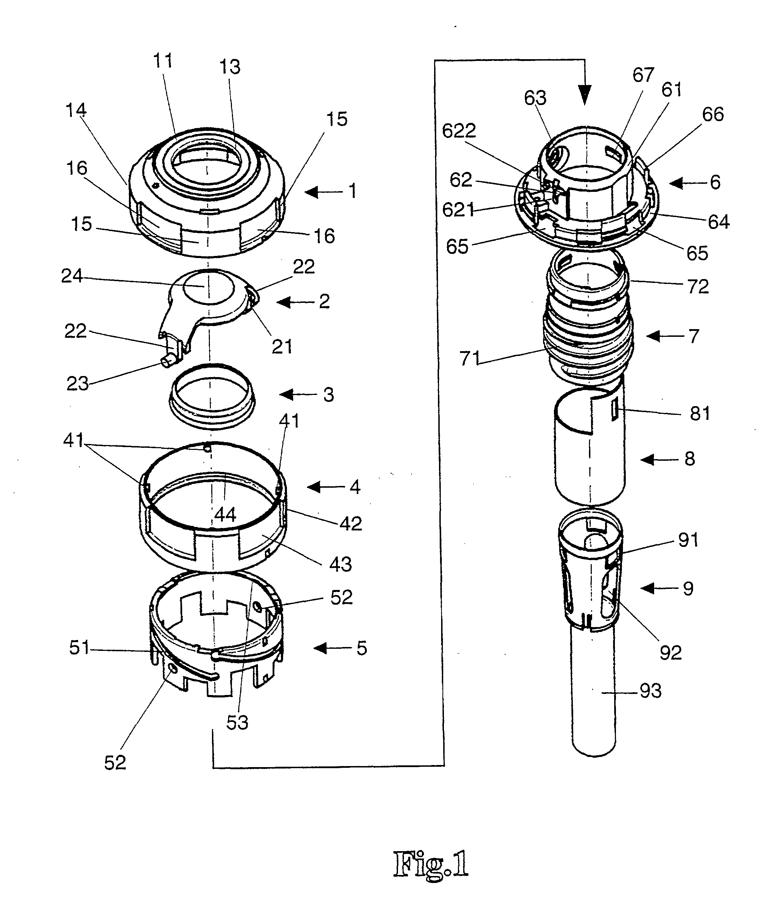

Der in Figur 1 gezeigte Kraftstoffbehälterverschluß umfaßt ein Kupplungsteil 1, das eine zentrale Öffnung 13 aufweist, deren lichte Weite größer als der Durchmesser einer üblichen Standardzapfpistole ist. Im Bereich der Öffnung 13 weist das Kupplungsteil 1 einen zylindrischen Abschnitt 11 auf. Im Anschluß an den zylindrischen Abschnitt 11 erweitert sich das Kupplungsteil nach unten und geht in einen weiteren zylindrischen Abschnitt 14 über. Der zylindrische Abschnitt 14 ist so profiliert, daß er in Radialrichtung erhabene Stellen 15 und versenkte Stellen 16 aufweist. Diese Profilierung setzt sich bis auf die Innenwand des zylindrischen Abschnitts 14 fort.

Der Kraftstoffbehälterverschluß aus Figur 1 umfaßt des weiteren ein Verschlußteil 2, mit einer Kappe 24, an der an zwei gegenüberliegenden Seiten zwei sich in Axialrichtung erstreckende Streben 22 befestigt sind. An den freien Enden beider Streben ist jeweils ein radial nach außen weisender Zapfen 23 angeordnet. An den Innenseiten der beiden Streben sind jeweils radial nach innen weisende Zapfen 21 vorgesehen.

Der Kraftstoffbehälterverschluß umfaßt des weiteren eine im Grobumriß etwa zylindrische Lippendichtung 3.

Ferner gehört zum Kraftstoffbehälterverschluß des Ausführungsbeispiels der Figur 1 ein im Grobumriß etwa zylinderförmiger Drehring 4. In der Nähe des oberen Randes des Drehrings 4 sind an der Innenseite vier radial nach innen vorstehende Zapfen 41 angeordnet. Die Außenwand des Drehrings 4 ist komplementär zur Innenwand des Kupplungsteils 1 profiliert und weist erhabene Stellen 42 und versenkte Stellen 43 auf. Der Außendurchmesser des Drehrings 4 entspricht der lichten Weite des zylindrischen Abschnitts 14 des Kupplungsteils 1, so daß die beiden Teile ineinanderpassen, wobei sich die jeweils erhabenen und versenkten Bereiche komplementär ergänzen. An der Innenwand des Drehrings 4 ist eine umlaufende Nut 44 vorgesehen.

Eine zylindrische Schiebehülse 5 ist an ihrer Außenwand mit vier Schraubennuten 51 versehen. Der Außendurchmesser der Schiebehülse 5 entspricht der lichten Weite des Drehrings 4, so daß diese in dem Drehring 4 paßgenau geführt wird, wobei die Zapfen 41 in die Schraubennuten 51 eingreifen. Die Schiebehülse 5 ist des weiteren mit zwei diametral gegenüberliegenden durchgehenden Löchern 52 versehen. Der untere Rand der Schiebehülse 5 ist zinnenförmig. Am oberen Rand ist ein radial nach innen weisender umlaufender Einraststeg 53 angeordnet.

Ein Flanschteil 6 weist einen zylindrischen Abschnitt 61 und einen Radialabschnitt 64 auf. Der Außendurchmesser des zylindrischen Abschnitts 61 entspricht etwa dem Abstand zwischen den beiden axialen Streben 22 des Verschlußteils 2. An zwei diametral sich gegenüberliegenden Stellen des zylindrischen Abschnitts 61 sind Nuten 62 angebracht, die die an der Innenseite der Streben 22 des Verschlußteils 2 angeordneten Zapfen 21 aufnehmen können. Jede Nut 62 weist einen Axialabschnitt 621 im unteren Bereich und einen daran anschließenden gekrümmten Abschnitt 622 im oberen Bereich auf. Wie aus Figur 1 zu erkennen ist, krümmt sich die Nut im oberen Bereich nach rechts. Bei der zweiten, der ersten Nut diametral gegenüberliegenden Nut, die in der Zeichnung nicht zu erkennen ist, weist der obere gekrümmte Abschnitt eine Linkskrümmung auf, so daß die beiden gekrümmten Enden im Ergebnis parallel in die gleiche Richtung weisen. An der Innenwand des zylindrischen Abschnitts 61 sind Ausklinkungen 67 vorgesehen. Ferner ist dort ein Überdruck/Unterdruck-Ventil 63 angeordnet, das zum Druckausgleich des Kraftstoffbehälters dient.

Der Radialabschnitt 64 des Flanschteils 6 ist mit Durchbrüchen 65 versehen, die in ihrer Form dem zinnenförmigen unteren Rand der Schiebehülse 5 entsprechen. Des weiteren sind an dem Radialabschnitt 64 federnde Klauen 66 angeordnet, die in die umlaufende Nut 44 des Drehrings 4 eingreifen können.

Der in Figur 1 dargestellte Kraftstoffbehälterverschluß ist zum Nachrüsten eines Kraftfahrzeugs vorgesehen, das einen Einschraubtankdeckelverschluß aufweist. Folglich gehört zu dem Kraftstoffbehälterverschluß der Figur 1 ein Einsatzrohr 7, das ein Außengewinde 71 aufweist. Das Außengewinde 71 ist so dimensioniert, daß es in einen Standardeinfüllstutzen eingeschraubt werden kann. In seinem oberen Bereich weist das Einsatzrohr 7 einen radial vorstehenden Sägezahnvorsprung 72 auf. Der Außendurchmesser des Einsatzrohres 7 entspricht in diesem Bereich dem Innendurchmesser des zylindrischen Abschnitts 61 des Flanschteils 6. Die elastischen Ausklinkungen 67 hintergreifen im zusammengesetzten Zustand den Sägezahnvorsprung 72, so daß die beiden Teile 6 und 7 fest miteinander verbunden werden können.

Zur Betätigung eines Tankentlüftungsventil oder dergl. ist ein Stößelrohr 8 vorgesehen, das eine Schürze 81 aufweist. Die Schürze 81 des Stößelrohrs 8 steht bei geöffnetem Verschlußteil 2 über den Mündungsrand vor, wodurch ein im Inneren des Einfüllrohres (nicht gezeigt) angeordnetes Ventil betätigt wird. Beim Schließen des Verschlußteils 2 wird die Schürze 81 des Stößelrohres 8 nach unten gedrückt, so daß das genannte Ventil im entgegengesetzten Sinn betätigt wird.

Schließlich umfaßt der Kraftstoffbehälterverschluß gemäß dem ersten Ausführungsbeispiel ein Führungsrohr 9, das einen konischen Abschnitt 91 mit Durchbrüchen 92 sowie einen zylindrischen Abschnitt 93 umfaßt.

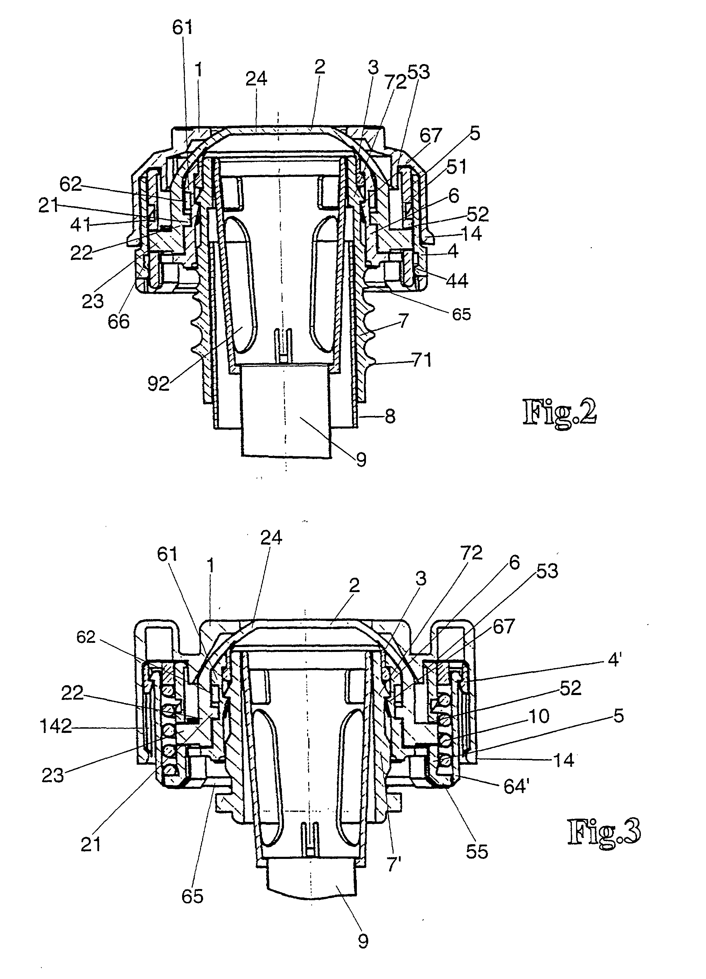

Figur 2 zeigt den zusammengesetzten Kraftstoffbehälterverschluß im Längsschnitt. Das Rohrteil, das durch das Verschlußteil zu verschließen ist, setzt sich aus dem zylindrischen Abschnitt 61 des Flanschteils 6 und dem oberen Abschnitt des Einsatzrohres 7 zusammen. Am oberen Mündungsrand ist zwischen beiden Teile die Lippendichtung 3 eingepreßt, die in Axialrichtung leicht vorsteht und mit diesem vorstehenden Teil die Abdichtfunktion gegenüber dem Verschlußteil 2 erfüllt. Die beiden Teile 6 und 7 sind über die Sägezahnvorsprünge 72 und die Ausklinkungen 67 miteinander verrastet, so daß sich eine starre Verbindung zwischen beiden Teilen ergibt. Innerhalb des Einsatzrohres 7 sind das Stößelrohr 8 und das Führungsrohr 9 angeordnet.

Im geschlossenen Zustand des Kraftstoffbehälterverschlusses ist der mit der Lippendichtung 3 versehene Mündungsrand des aus den Teilen 61 und 7 bestehenden Rohrteils durch die Kappe 24 des Verschlußteils 2 bedeckt. Die beiden sich diametral gegenüberliegenden Streben 22 des Verschlußteils umschließen den zylindrischen Abschnitt 61 des Flanschteils 6, wobei die Zapfen 21 des Verschlußteils 2 in die Nuten 62 des Flanschteils 6 eingreifen. Das Flanschteil 6 trägt die Schiebehülse 5, die mit ihrem zinnenförmigen unteren Rand in die Durchbrüche 65 des Flanschteils 6 eingreift und somit eine axiale präzise Führung erhält, jedoch gegen das Flanschteil unverdrehbar ist.

In die diametral sich gegenüberliegenden Löcher 52 der Schiebehülse 5 greifen die nach außen stehenden Zapfen 23 des Verschlußteils 2 ein. Die Schiebehülse 5 ist von dem Drehring 4 umgeben, wobei die radial nach innen vorstehenden Zapfen 41 des Drehrings in die Schraubennuten 51 der Schiebehülse 5 eingreifen.

In die umlaufende Nut 44 des Drehrings 4 greifen die Klauen 66 des Flanschteils 6 ein, so daß der Drehring drehbar gelagert, jedoch in seiner Axialposition fixiert ist.

Das Kupplungsteil 1 überdeckt mit seinem zylindrischen Abschnitt 14 teilweise den Drehring 4, wobei die erhabenen und versenkten Stellen der beiden Teile sich komplementär ergänzen, so daß eine formschlüssige, drehfeste Verbindung zwischen dem Kupplungsteil 1 und dem Drehring 4 hergestellt wird, wobei jedoch das Kupplungsteil 1 gegenüber dem Drehring 4 axial frei beweglich bleibt. Drei vorstehende Klauen (in der speziellen Situation der Schnittdarstellung der Figur 1 nicht zu erkennen) des Kupplungsteils 1 hintergreifen den Einraststeg 53 der Schiebehülse 5, so daß das Kupplungsteil 1 und die Schiebehülse 5 axial gegenseitig fixiert jedoch gegeneinander drehbar sind.

Der Kraftstoffbehälterverschluß arbeitet wie folgt:

Der Kraftstoffbehälterverschluß, der die Abmessungen eines standardmäßigen Tankdeckels aufweist, wird mit dem Gewinde 71 des Einsatzrohres 7 in einen für einen Schraubverschluß vorgesehenen Einfüllstutzen eines Kraftfahrzeuges unter Zwischenschaltung einer Dichtung (nicht dargestellt) eingeschraubt. Die Schraubverbindung wird durch einen Splint (in der Schnittdarstellung nicht zu erkennen) gegen Herausschrauben gesichert.

In der in Figur 2 dargestellten Lage ist die Mündung durch die Kappe 24 des Verschlußteils 2 unter Zwischenschaltung der Lippendichtung 3 dicht verschlossen. Das Verschlußteil 2 wird gegen die Lippendichtung 3 gepreßt, da die Zapfen 23 des Verschlußteils 2 durch die Schiebehülse 5 in Richtung auf das Innere des Einfüllrohres gezogen werden. Zusätzlich drückt das Kupplungsteil 1 auf das Verschlußteil 2 und sichert dieses gegen ungewolltes Öffnen auch bei einem Unfall. Eine entsprechende Ausgestaltung der Schraubennut 51 in der Schiebehülse 5 bewirkt, daß die Zapfen 41 in der Verschlußposition in der Schraubennut 51 einrasten und die Vorspannung in axialer Richtung maximal ist.

Zum Betanken wird durch Drehung des Kupplungsteils 1 wird auch der Drehring 4 gedreht, wodurch die Zapfen 41 aus der Einrastposition der Schraubennut 51 gelangen und die Schiebehülse 5 sich zusammen mit dem Kupplungsteil 1 nach oben bewegt. Hierdurch entfernt sich das Kupplungsteil 1 etwas von dem Verschlußteil 2 und gibt dieses frei. Durch die weitere Drehung des Kupplungsteils 1 und die daraus resultierende Verschiebung der Schiebehülse 5 werden auch die Zapfen 23 des Verschlußteils 2 nach oben geschoben, so daß sich das Verschlußteil 2 in dieser ersten Phase seiner Öffnungsbewegung in axialer Richtung von der Mündung des Rohrteils und von der Lippendichtung 3 abhebt. Die Zapfen 21 des Verschlußteils 2 gleiten in der Nut 62, genauer gesagt in dem ersten axial verlaufenden Abschnitt der Nut 62, wodurch die oben beschriebene Anhebung des Verschlußteils 2 in axialer Richtung erreicht wird. Die Nut 62 geht jedoch dann in eine Krümmung über, so daß die Zapfen 21 gegenseitig parallel aus der Zeichenebene herausgeschwenkt werden. Das Verschlußteil 2 wird im Laufe dieser zweiten Phase der Öffnungsbewegung um die durch die Zapfen 23 definierte Querachse geschwenkt. Der jeweilige sich weiter nach oben bewegende Zapfen 23 überholt gewissermaßen in Axialrichtung den jeweiligen in den gekrümmten Nutabschnitt einlaufenden Zapfen 21, so daß das Verschlußteil um die Zapfen 23 um ca. 90° geschwenkt wird, bis die Mündung des Rohrteils freigegeben ist.

Im Laufe dieses Vorgangs hebt sich infolge der Verschiebung der Schiebehülse 5 das Kupplungsteil 1 in Axialrichtung weiter ab, so daß der notwendige Bewegungsfreiraum für das Verschlußteil 2 geschaffen wird.

Sodann wird das Auslaufrohr (nicht gezeigt) in das Führungsrohr 9 eingeführt, bis die Mündung des Auslaufrohres in den zylindrischen Teil des Führungsrohres 9 gelangt. Die Bleifreiklappe (nicht gezeigt) des Kraftstoffeinfüllstutzens ist durch das untere Ende des Führungsrohres 9 in Offenstellung gehalten.

Danach wird über das Auslaufrohr Kraftstoff eingeleitet, wobei aus dem Tank des Kraftstoffbehälters verdrängte Dämpfe über die Durchbrüche 92 nach außen treten und von einer das Auslaufrohr umgebenden Manschette der Betankungseinrichtung aufgesaugt werden.

Nach dem Einfüllen der gewünschten Kraftstoffmenge wird das Auslaufrohr zurückgezogen und das Kupplungsteil im Uhrzeigersinn gedreht, so daß unter Umkehrung des oben beschriebenen Ablaufs das Verschlußteil 2 auf die Rohrmündung geführt und das Kupplungsteil 1 von oben gegen das Verschlußteil 2 gepreßt wird.

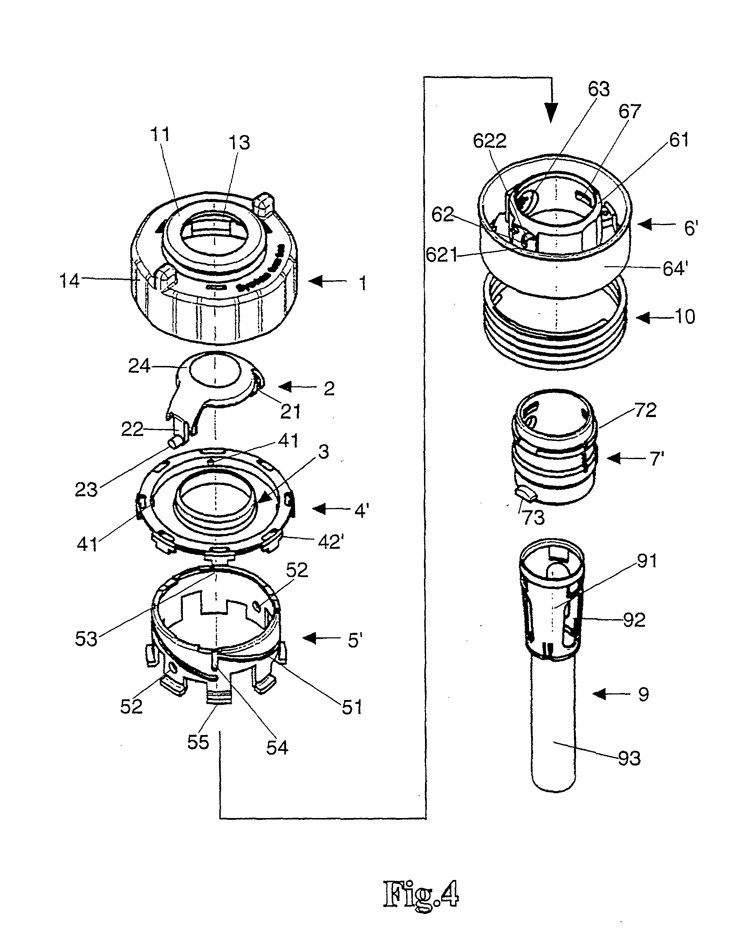

In Figur 4 ist ein weiteres Ausführungsbeispiel eines Kraftstoffbehälterverschlusses in perspektivischer Explosionsdarstellung gezeigt. Der Kraftstoffbehälterverschluß umfaßt ein Kupplungsteil 1, das eine zentrale Öffnung 13 aufweist, deren lichte Weite größer als der Durchmesser einer üblichen Standardzapfpistole ist. Im Bereich der Öffnung 13 weist das Kupplungsteil 1 einen zylindrischen Abschnitt 11 auf. Im Anschluß an den zylindrischen Abschnitt 11 erweitert sich das Kupplungsteil nach unten und geht in einen weiteren zylindrischen Abschnitt 14 über. An der Innenseite des zylindrischen Abschnitts 14 sind Längsnuten vorgesehen (in der Darstellung der Figur 4 nicht zu erkennen).

Der Kraftstoffbehälterverschluß aus Figur 4 umfaßt des weiteren ein Verschlußteil 2, mit einer Kappe 24, an der an zwei gegenüberliegenden Seiten zwei sich in Axialrichtung erstreckende Streben 22 befestigt sind. An den freien Enden beider Streben ist jeweils ein radial nach außen weisender Zapfen 23 angeordnet. An den Innenseiten der beiden Streben sind jeweils radial nach innen weisende Zapfen 21 vorgesehen.

Der Kraftstoffbehälterverschluß umfaßt des weiteren eine im Grobumriß etwa zylindrische Lippendichtung 3.

Ferner gehört zum Kraftstoffbehälterverschluß des Ausführungsbeispiels der Figur 4 ein Drehring 4'. An der Innenseite des Drehrings 4' sind vier radial nach innen vorstehende Zapfen 41 angeordnet. Die Außenwand des Drehrings 4 ist komplementär zur Innenwand des Kupplungsteils 1 profiliert und weist radial vorstehende Stellen 42' auf. Der Außendurchmesser des Drehrings 4 entspricht der lichten Weite des zylindrischen Abschnitts 14 des Kupplungsteils 1, so daß die beiden Teile ineinanderpassen, wobei die radial vorstehenden Stellen 42' in die Längsnuten des Kupplungsteils eingreifen. Dadurch ergibt sich eine drehfeste Verbindung zwischen dem Drehring 4' und dem Kupplungsteil 1. Das Kupplungsteil 1 bleibt jedoch gegenüber dem Drehring 4' axial beweglich.

Eine zylindrische Schiebehülse 5 ist an ihrer Außenwand mit vier Schraubennuten 51 versehen. Diese weisen jeweils an ihrem oben gelegenen Ende einen axial verlaufenden Abschnitt 54 auf. Die Schiebehülse 5 ist des weiteren mit zwei diametral gegenüberliegenden durchgehenden Löchern 52 versehen. Der untere Rand der Schiebehülse 5 ist zinnenförmig und weist radial nach außen stehende Vorsprünge 55 auf. Am oberen Rand ist ein radial nach innen weisender umlaufender Einraststeg 53 angeordnet.

Ein Flanschteil 6' weist einen zylindrischen Abschnitt 61 und einen topfförmigen Teil 64' auf. Der Außendurchmesser des zylindrischen Abschnitts 61 entspricht etwa dem Abstand zwischen den beiden axialen Streben 22 des Verschlußteils 2. An zwei diametral sich gegenüberliegenden Stellen des zylindrischen Abschnitts 61 sind Nuten 62 angebracht, die die an der Innenseite der Streben 22 des Verschlußteils 2 angeordneten Zapfen 21 aufnehmen können. Jede Nut 62 weist einen Axialabschnitt 621 im unteren Bereich und einen daran anschließenden gekrümmten Abschnitt 622 im oberen Bereich auf. Wie aus Figur 4 zu erkennen ist, krümmt sich die Nut im oberen Bereich nach rechts. Bei der zweiten, der ersten Nut diametral gegenüberliegenden Nut, die in der Zeichnung nicht zu erkennen ist, weist der obere gekrümmte Abschnitt eine Linkskrümmung auf, so daß die beiden gekrümmten Enden im Ergebnis parallel in die gleiche Richtung weisen. An der Innenwand des zylindrischen Abschnitts 61 sind Ausklinkungen 67 vorgesehen.

Der Boden des topfförmigen Teils 64' des Flanschteils 6 ist mit Durchbrüchen versehen (in der Darstellung der Figur 4 nicht erkennbar), die in ihrer Form dem zinnenförmigen unteren Rand der Schiebehülse 5 entsprechen.

Ferner ist eine als Druckfeder ausgebildete Feder 10 vorgesehen.

Der in Figur 1 dargestellte Kraftstoffbehälterverschluß ist zum Nachrüsten eines Kraftfahrzeugs vorgesehen, das einen Bajonettdeckelverschluß (Renk-Verschluß) aufweist. Folglich gehört zu dem Kraftstoffbehälterverschluß der Figur 4 ein Einsatzrohr 7', das zwei diametral gegenüberliegende Fanghaken 73 aufweist. Das Einsatzrohr 7' ist so dimensioniert, daß es in einen Standardeinfüllstutzen eingesetzt werden kann. In seinem oberen Bereich weist das Einsatzrohr 7' einen radial vorstehenden Sägezahnvorsprung 72 auf. Der Außendurchmesser des Einsatzrohres 7' entspricht in diesem Bereich dem Innendurchmesser des zylindrischen Abschnitts 61 des Flanschteils 6. Die elastischen Ausklinkungen 67 hintergreifen im zusammengesetzten Zustand den Sägezahnvorsprung 72, so daß die beiden Teile 6 und 7 fest miteinander verbunden werden können.

Schließlich umfaßt der Kraftstoffbehälterverschluß gemäß dem zweiten Ausführungsbeispiel ein Führungsrohr 9, das einen konischen Abschnitt 91 mit Durchbrüchen 92 sowie einen zylindrischen Abschnitt 93 umfaßt.

Figur 3 zeigt den zusammengesetzten Kraftstoffbehälterverschluß im Längsschnitt. Das Rohrteil, das durch das Verschlußteil zu verschließen ist, setzt sich aus dem zylindrischen Abschnitt 61 des Flanschteils 6 und dem oberen Abschnitt des Einsatzrohres 7' zusammen. Am oberen Mündungsrand ist zwischen beiden Teile die Lippendichtung 3 eingepreßt, die in Axialrichtung leicht vorsteht und mit diesem vorstehenden Teil die Abdichtfunktion gegenüber dem Verschlußteil 2 erfüllt. Die beiden Teile 6 und 7' sind über die Sägezahnvorsprünge 72 und die Ausklinkungen 67 miteinander verrastet, so daß sich eine starre Verbindung zwischen beiden Teilen ergibt. Innerhalb des Einsatzrohres 7' ist das Führungsrohr 9 angeordnet.

Im geschlossenen Zustand des Kraftstoffbehälterverschlusses ist der mit der Lippendichtung 3 versehene Mündungsrand des aus den Teilen 61 und 7' bestehenden Rohrteils durch die Kappe 24 des Verschlußteils 2 bedeckt. Die beiden sich diametral gegenüberliegenden Streben 22 des Verschlußteils umschließen den zylindrischen Abschnitt 61 des Flanschteils 6, wobei die Zapfen 21 des Verschlußteils 2 in die Nuten 62 des Flanschteils 6 eingreifen. Das Flanschteil 6 trägt die Schiebehülse 5, die mit ihrem zinnenförmigen unteren Rand in die Durchbrüche 65 des Flanschteils 6 eingreift und somit eine axiale präzise Führung erhält, jedoch gegen das Flanschteil unverdrehbar ist.

In die diametral sich gegenüberliegenden Löcher 52 der Schiebehülse 5 greifen die nach außen stehenden Zapfen 23 des Verschlußteils 2 ein. Die Schiebehülse 5 ist von dem Drehring 4' umgeben, wobei die radial nach innen vorstehenden Zapfen 41 (in der Schnittdarstellung der Figur 3 nicht erkennbar) des Drehrings in die Schraubennuten (in der Schnittdarstellung der Figur 3 nicht erkennbar) der Schiebehülse 5 eingreifen.

An dem Außenrand des topfförmigen Teils 64' ist der Drehring 4' eingeklipst. Zwischen diesem und den Vorsprüngen 55 der Schiebehülse 5 ist die Feder 10 angeordnet.

Das Kupplungsteil 1 überdeckt mit seinem zylindrischen Abschnitt 14 das topfförmige Teil 64' und den Drehring 4', wobei die radial vorstehenden Stellen 42' des Drehrings 4' in die Längsnuten an der Innenwand des Kupplungsteils eingreifen, so daß eine formschlüssige, drehfeste Verbindung zwischen dem Kupplungsteil 1 und dem Drehring 4' hergestellt wird, wobei jedoch das Kupplungsteil 1 gegenüber dem Drehring 4' axial frei beweglich bleibt. Drei vorstehende Klauen (in der speziellen Situation der Schnittdarstellung der Figur 1 nicht zu erkennen) des Kupplungsteils 1 hintergreifen den Einraststeg 53 der Schiebehülse 5, so daß das Kupplungsteil 1 und die Schiebehülse 5 axial gegenseitig fixiert jedoch gegeneinander drehbar sind.

Die Feder 10 stützt sich zwischen den Vorsprüngen 55 der Schiebehülse 5' und dem Drehring 4' ab.

Die Funktion des Kraftstoffbehälterverschlusses wird nachfolgend erläutert:

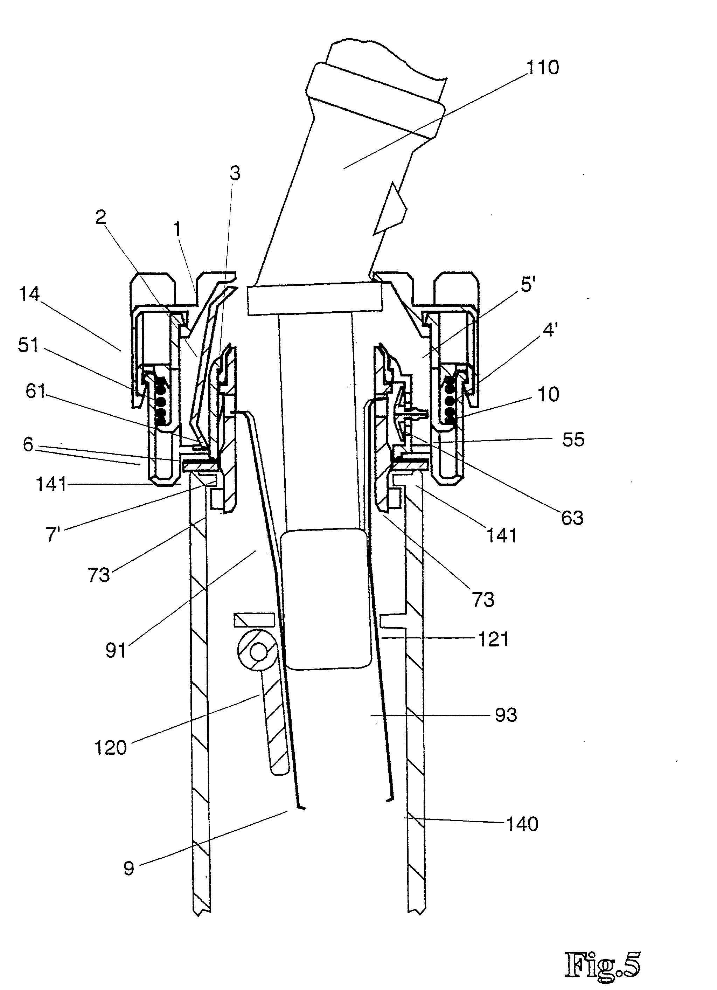

Der Kraftstoffbehälterverschluß, der die Abmessungen eines standardmäßigen Tankdeckels aufweist, wird mit den Fanghaken 73 des Einsatzrohres 7' in einen für einen Bajonettverschluß vorgesehenen Kraftstoffeinfüllstutzen 140 eines Kraftfahrzeuges unter Zwischenschaltung einer Dichtung 141 eingesetzt und dort durch einen Splint (in der Schnittdarstellung nicht zu erkennen) gegen Herausnehmen gesichert (Figur 5).

In der in Figur 3 dargestellten Lage ist die Mündung durch die Kappe 24 des Verschlußteils 2 unter Zwischenschaltung der Lippendichtung 3 dicht verschlossen. Das Verschlußteil 2 wird gegen die Lippendichtung 3 gepreßt, da die Zapfen 23 des Verschlußteils 2 durch die Schiebehülse 5 in Richtung auf das Innere des Einfüllrohres durch die Wirkung der Feder 10 gezogen werden. Zusätzlich drückt das Kupplungsteil 1 auf das Verschlußteil 2 und sichert dieses gegen ungewolltes Öffnen auch bei einem Unfall.

Zum manuellen Betanken des Kraftfahrzeugs wird das Kupplungsteil 1 im Gegenuhrzeigersinn gedreht. Durch die Drehung des Kupplungsteils 1 wird auch der Drehring 4' gedreht, wodurch die Zapfen 41 sich in die Schraubennut 51 bewegen und die Schiebehülse 5 sich zusammen mit dem Kupplungsteil 1 nach oben bewegt. Hierdurch entfernt sich das Kupplungsteil 1 etwas von dem Verschlußteil 2 und gibt dieses frei. Durch die weitere Drehung des Kupplungsteils 1 und die daraus resultierende Verschiebung der Schiebehülse 5 werden auch die Zapfen 23 des Verschlußteils 2 nach oben geschoben, so daß sich das Verschlußteil 2 in dieser ersten Phase seiner Öffnungsbewegung in axialer Richtung von der Mündung des Rohrteils und von der Lippendichtung 3 abhebt. Die Zapfen 21 des Verschlußteils 2 gleiten in der Nut 62, genauer gesagt in dem ersten axial verlaufenden Abschnitt der Nut 62, wodurch die oben beschriebene Anhebung des Verschlußteils 2 in axialer Richtung erreicht wird. Die Nut 62 geht jedoch dann in eine Krümmung über, so daß die Zapfen 21 gegenseitig parallel aus der Zeichenebene herausgeschwenkt werden. Das Verschlußteil 2 wird im Laufe dieser zweiten Phase der Öffnungsbewegung um die durch die Zapfen 23 definierte Querachse geschwenkt. Der jeweilige sich weiter nach oben bewegende Zapfen 23 überholt gewissermaßen in Axialrichtung den jeweiligen in den gekrümmten Nutabschnitt 622 einlaufenden Zapfen 21, so daß das Verschlußteil um die Zapfen 23 um ca. 90° geschwenkt wird, bis die Mündung des Rohrteils freigegeben ist.

Im Laufe dieses Vorgangs hebt sich infolge der Verschiebung der Schiebehülse 5 das Kupplungsteil 1 in Axialrichtung weiter ab, so daß der notwendige Bewegungsfreiraum für das Verschlußteil 2 geschaffen wird.

Der geöffnete Zustand ist in Figur 5 gezeigt, auf die im folgenden Bezug genommen wird. Figur 5 zeigt einen Schnitt des Kraftstoffbehälterverschlusses wie in Figur 3, wobei jedoch die Schnittebene um 90° gegenüber der Schnittebene der Figur 3 gedreht ist. Außerdem ist der Kraftstoffbehälterverschluß in geöffnetem Zustand mit eingeführter Zapfpistole 110 gezeigt. Das Verschlußteil 2 ist zur Seite gekippt und hat die mit der Lippendichtung 3 bestückte Mündung des Rohrteiles 61, 7' freigegeben.

Die Zapfpistole 110 wurde in das Führungsrohr 9 eingeführt, bis die Mündung der Zapfpistole in den zylindrischen Teil des Führungsrohres 9 gelangt. Die Bleifreiklappe 120 des Kraftstoffeinfüllstutzens 140 ist durch das untere Ende des Führungsrohres 9 in Offenstellung gehalten.

Nach dem Einfüllen der gewünschten Kraftstoffmenge wird die Zapfpistole zurückgezogen und das Kupplungsteil im Uhrzeigersinn gedreht, so daß unter Umkehrung des oben beschriebenen Ablaufs das Verschlußteil 2 auf die Rohrmündung geführt und das Kupplungsteil 1 von oben gegen das Verschlußteil 2 gepreßt wird.

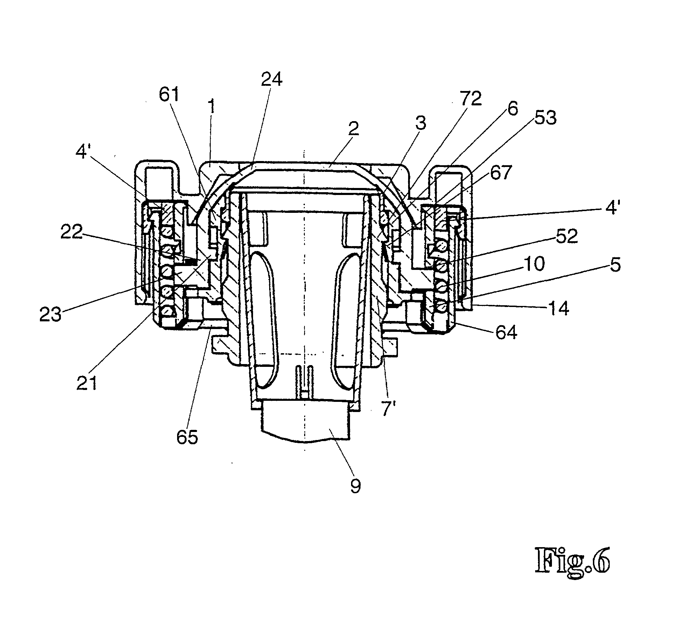

Figur 6 zeigt einen Kraftstoffbehälterverschluß gemäß einer weiteren Ausführungsform im Längsschnitt. Der Kraftstoffbehälterverschluß gemäß Figur 6 unterscheidet sich von dem Kraftstoffbehälterverschluß der Figur 3 dadurch, daß die Feder 10 als Druck/Torsions-Feder ausgeführt ist.

Die bei der Ausführungsform der Figur 3 vorhandenen Vorsprünge 55 der Schiebehülse 5 sind weggelassen, so daß die Feder 10 an diesen Vorsprüngen nicht anschlägt. Statt dessen ist die spiralförmige Feder 10 mit einem ihrer freien Enden fest mit dem Drehring 4' verbunden, während das zweite Ende abgewinkelt ist und in die Schiebehülse 5 einhakt. Die Einhakverbindung ist in der in Figur 7 gewählten Schnittdarstellung nicht zu erkennen.

Wird der Kraftstoffbehälterverschluß durch Drehen des Kupplungsteils 1 geöffnet, verwindet sich die vorgespannte Feder 10 und übt ein Rückstelldrehmoment über den Drehring 4' auf das Kupplungsteil 1 aus, so daß nach Loslassen des Kupplungsteils 1 dieses in die Ausgangslage zurückdreht und den Kraftstoffbehälterverschluß automatisch verschließt.

Bei Öffnen des Kraftstoffbehälterverschlusses durch axiales Ziehen an dem Kupplungsteil 1 wirkt die Feder 10 - wie beim Ausführungsbeispiel der Figur 3 - als Druckfeder, die - nach Loslassen des Kupplungsteils 1 - dieses wieder unter Schließung des Verschlußteils 2 in seine Ausgangsposition zurückführt.

Der übrige Aufbau und die Funktion des Kraftstoffbehälterverschlusses gemäß Figur 6 sind identisch zu Aufbau und Funktion des Verschlusses, der in der Figur 3 beziehungsweise der perspektivischen Explosionsdarstellung der Figur 4 dargestellt ist, so daß zur Vermeidung von Wiederholungen auf die diesbezügliche obige Beschreibung hingewiesen wird.

## Patentansprüche

1. Kraftstoffbehälterverschluß zur Befestigung auf dem Kraftstoffeinfüllstutzen eines Kraftfahrzeugs, mit einem beweglichen Verschlußteil (2), das den Zugang in das Innere des Kraftstoffeinfüllstutzens wahlweise öffnet oder schließt, wobei der Kraftstoffbehälterverschluß auch während des Betankens auf dem Mündungsrand des Kraftstoffeinfüllstutzens verbleibt, mit einem Kupplungsteil (1) zur Betätigung des Verschlußteils (2), und mit einem Führungsrohr (9), **dadurch gekennzeichnet, daß** das Führungsrohr (9) eine solche Länge aufweist, daß es sich in das Innere des Kraftstoffeinfüllstutzens hinein mindestens bis in eine Tiefe erstreckt, oberhalb der üblicherweise eine Innenklappe (120) angeordnet ist, so daß die Innnenklappe (120) durch das Führungsrohr (9) in Offenstellung gehalten wird.

2. Kraftstoffbehälterverschluß nach Anspruch 1, **dadurch gekennzeichnet, daß** das Führungsrohr (9) einen sich in Richtung auf das Innere des Kraftstoffeinfüllstutzens hin verjüngenden Abschnitt (91) aufweist.

3. Kraftstoffbehälterverschluß nach Anspruch 2, **dadurch gekennzeichnet, daß** in dem sich verjüngenden Abschnitt (91) Durchbrüche (92) vorgesehen sind.

4. Kraftstoffbehälterverschluß nach einem der Ansprüche 1 bis 3, **dadurch gekennzeichnet, daß** das Führungsrohr (9) zumindest in seinem zylindrischen Abschnitt aus Stahl besteht und eine Wandstärke von 0,25 bis 0,8 mm aufweist.

5. Kraftstoffbehälterverschluß nach einem der vorhergehenden Ansprüche, **dadurch gekennzeichnet, daß** das Verschlußteil (2) im Schließzustand den Rand der Mündung eines Rohrteils (61, 7) bedeckt und mit einer Zwangsführung (21, 62) so geführt ist, daß es beim Öffnen des Kraftstoffbehälterverschlusses in einer ersten Phase des Öffnungsvorgangs in annähernd axialer Richtung des Rohrteiles (61, 7) von der Mündung des Rohrteils abhebt und in einer daran anschließenden zweiten Phase des Öffnungsvorgangs um eine quer zur Längsrichtung des Rohrteils (61, 7) im Bereich des Rohrteils (61, 7) oder dessen axialer Verlängerung liegende Achse gedreht wird, um die Mündung freizugeben, wobei das Verschlußteil (2) mit dem Kupplungsteil (1) gekoppelt ist, über das mittelbar oder unmittelbar die Bewegung des Verschlußteils (2) gesteuert wird.

6. Kraftstoffbehälterverschluß nach Anspruch 5, **dadurch gekennzeichnet, daß** das Kupplungsteil (1) formschlüssig an einen Drehring (4, 4') derart gekoppelt ist, daß es gegen diesen axial verschieblich, jedoch drehfest mit diesem verbunden ist.

7. Kraftstoffbehälterverschluß nach Anspruch 6, **dadurch gekennzeichnet, daß** der Drehring (4, 4') mit einer Schiebehülse (5, 5') über eine Schraubverbindung (51, 41) derart in Eingriff steht, daß durch Drehen des Drehrings (4, 4') die Schiebehülse (5, 5') in Axialrichtung verschoben wird.

8. Kraftstoffbehälterverschluß nach Anspruch 7, **dadurch gekennzeichnet, daß** das Verschlußteil (2) kappenförmig ist und zwei diametral gegenüberliegende sich in Axialrichtung erstreckende Streben (22) aufweist, und daß die Streben (22) über eine Zapfen/Loch-Verbindung (23, 52) mit der Schiebehülse (5, 5') verbunden sind.

9. Kraftstoffbehälterverschluß nach Anspruch 8, **dadurch gekennzeichnet, daß** die Schiebehülse (5, 5') mit dem Kupplungsteil (1) formschlüssig derart verbunden ist, daß sie in bezug auf das Kupplungsteil (1) in Axialrichtung festgelegt ist, jedoch das Kupplungsteil (1) drehbar gegenüber der Schiebehülse (5, 5') ist.

10. Kraftstoffbehälterverschluß nach Anspruch 9, **dadurch gekennzeichnet, daß** die Streben (22) das Rohrteil (7, 61) umschließen und daß die Zwangsführung (21, 62) zwischen den Streben (22) und dem Rohrteil (7, 61) in Form einer Kulissenführung (21, 62) ausgebildet ist.

11. Kraftstoffbehälterverschluß nach Anspruch 10, **dadurch gekennzeichnet, daß** die Kulissenführung eine Zapfen/Nut-Führung (21, 62) ist.

12. Kraftstoffbehälterverschluß nach Anspruch 11, **dadurch gekennzeichnet, daß** die Nut (62) der Zapfen/Nut-Führung (21, 62) einen in Axialrichtung verlaufenden ersten Nutabschnitt (621) und einen daran anschließenden gekrümmten zweiten Nutabschnitt (622) aufweist, wobei der Zapfen (21) bei geschlossenem Kraftstoffbehälterverschluß und in der ersten Phase der Öffnungsbewegung sich im ersten Nutabschnitt (621) befindet und während der zweiten Phase der Öffnungsbewegung in den zweiten Nutabschnitt (622) einläuft.

13. Kraftstoffbehälterverschluß nach einem der vorhergehenden Ansprüche, **dadurch gekennzeichnet, daß** das Rohrteil (7, 61) aus einem Flanschteil (6, 6') mit einem zylindrischen Abschnitt (61) und einem Einsatzrohr (7) gebildet ist und daß zwischen dem Einsatzrohr (7) und dem das Einsatzrohr umgebenden zylindrischen Abschnitt (61) eine über den Mündungsrand des so gebildeten Rohrteils vorstehende Lippendichtung (3) angeordnet ist.

14. Kraftstoffbehälterverschluß nach Anspruch 13, **dadurch gekennzeichnet, daß** das Einsatzrohr (7) ein Gewinde (71) zum Einschrauben in einen Kraftstoffeinfüllstutzen (140) aufweist.

15. Kraftstoffbehälterverschluß nach Anspruch 13, **dadurch gekennzeichnet, daß** das Einsatzrohr (7) ein Paar Fanghaken (73) zum Befestigen in einem Kraftstoffeinfüllstutzen (140) nach Art eines Bajonettverschlusses aufweist.

16. Kraftstoffbehälterverschluß nach Anspruch 6, **dadurch gekennzeichnet, daß** der Drehring (4, 4') gegenüber dem Flanschteil (6, 6') axial festgelegt, jedoch drehbar in bezug auf dieses gelagert ist.

17. Kraftstoffbehälterverschluß nach Anspruch 6, **dadurch gekennzeichnet, daß** die Schiebehülse (5, 5') formschlüssig mit dem Flanschteil (6, 6') derart verbunden ist, daß sie gegen dieses axial verschieblich, jedoch unverdrehbar mit diesem verbunden ist.

18. Kraftstoffbehälterverschluß nach Anspruch 12, **dadurch gekennzeichnet, daß** in dem Einsatzrohr (7) ein axial gleitbares Stößelrohr (8) angeordnet ist, das an die Bewegung des Verschlußteils (2) gekoppelt ist.

19. Kraftstoffbehälterverschluß nach Anspruch 6, **dadurch gekennzeichnet, daß** die Schiebehülse (5') axial verschieblich gelagert ist und zusammen mit dem Kupplungsteil (1) gegen die Kraft einer Feder (10) verschiebbar ist.

20. Kraftstoffbehälterverschluß nach Anspruch 6, **dadurch gekennzeichnet, daß** der Drehring (4') durch eine Torsionsfeder (10') vorgespannt ist.

21. Kraftstoffbehälterverschluß nach Anspruch 5, **dadurch gekennzeichnet, daß** in der Seitenwand des Rohrteils (61, 7) ein Überdruck/Unterdruckventil (63) angeordnet ist.

## Claims

1. Fuel tank closure for fastening on the fuel filler neck of a motor vehicle, having a movable closure part (2), which selectively opens or closes the entrance into the interior of the fuel filler neck, wherein the fuel tank closure remains on the mouth edge of the fuel filler neck even during refuelling, having a coupling part (1) for actuating the closure part (2), and having a guide tube (9), **characterized in that** the guide tube (9) is of such a length that it extends into the interior of the fuel filler neck at least to a depth, above which an internal flap (120) is usually situated, so that the internal flap (120) is held in open position by the guide tube (9).

2. Fuel tank closure according to claim 1, **characterized in that** the guide tube (9) has a portion (91), which tapers in the direction of the interior of the fuel filler neck.

3. Fuel tank closure according to claim 2, **characterized in that** through-holes (92) are provided in the tapering portion (91).

4. Fuel tank closure according to one of claims 1 to 3, **characterized in that** the guide tube (9) at least in its cylindrical portion is made of steel and has a wall thickness of 0.25 to 0.8 mm.

5. Fuel tank closure according to one of the preceding claims, **characterized in that** the closure part (2) in the closed state covers the edge of the mouth of a tubular part (61, 7) and is guided by a restraining guide means (21, 62) such that during opening of the fuel tank closure in a first phase of the opening operation it lifts in approximately axial direction of the tubular part (61, 7) off the mouth of the tubular part and in a subsequent second phase of the opening operation is rotated about an axis, which lies transversely of the longitudinal direction of the tubular part (61, 7) in the region of the tubular part (61, 7) or the axial extension thereof, in order to clear the mouth, wherein the closure part (2) is coupled to the coupling part (1), by means of which the motion of the closure part (2) is indirectly or directly controlled.

6. Fuel tank closure according to claim 5, **characterized in that** the coupling part (1) is positively coupled to a turning ring (4, 4') so as to be axially displaceable relative thereto but non-rotatably connected thereto.

7. Fuel tank closure according to claim 6, **characterized in that** the turning ring (4, 4') is in engagement with a sliding sleeve (5, 5') via a screw connection (51, 41) in such a way that through turning of the turning ring (4, 4') the sliding sleeve (5, 5') is displaced in axial direction.

8. Fuel tank closure according to claim 7, **characterized in that** the closure part (2) is cap-shaped and has two diametrically opposed, axially extending supports (22), and that the supports (22) are connected by a pin-and-hole connection (23, 52) to the sliding sleeve (5, 5').

9. Fuel tank closure according to claim 8, **characterized in that** the sliding sleeve (5, 5') is positively connected to the coupling part (1) so as to be fixed in axial direction relative to the coupling part (1), the coupling part (1) however being rotatable relative to the sliding sleeve (5, 5').

10. Fuel tank closure according to claim 9, **characterized in that** the supports (22) enclose the tubular part (7, 61) and that the restraining guide means (21, 62) between the supports (22) and the tubular part (7, 61) takes the form of a link guide (21, 62).

11. Fuel tank closure according to claim 10, **characterized in that** the link guide is a pin-and-slot guide (21, 62).

12. Fuel tank closure according to claim 11, **characterized in that** the slot (62) of the pin-and-slot guide (21, 62) comprises an axially extending first slot portion (621) and an adjoining curved second slot portion (622), wherein the pin (21) in the closed state of the fuel tank closure and in the first phase of the opening motion is situated in the first slot portion (621) and during the second phase of the opening motion runs into the second slot portion (622).

13. Fuel tank closure according to one of the preceding claims, **characterized in that** the tubular part (7, 61) is formed by a flanged part (6, 6') having a cylindrical portion (61) and an insertion tube (7) and that disposed between the insertion tube (7) and the cylindrical portion (61) surrounding the insertion tube is a lip seal (3), which protrudes from the mouth edge of the tubular part thus formed.

14. Fuel tank closure according to claim 13, **characterized in that** the insertion tube (7) has a thread (71) for screwing into a fuel filler neck (140).

15. Fuel tank closure according to claim 13, **characterized in that** the insertion tube (7) has a pair of catch hooks (73) for fastening in a fuel filler neck (140) in the manner of a bayonet fixing.

16. Fuel tank closure according to claim 6, **characterized in that** the turning ring (4, 4') is axially fixed relative to the flanged part (6, 6') but is mounted rotatably relative thereto.

17. Fuel tank closure according to claim 6, **characterized in that** the sliding sleeve (5, 5') is positively connected to the flanged part (6, 6') so as to be axially displaceable thereto but connected non-rotatably thereto.

18. Fuel tank closure according to claim 12, **characterized in that** disposed in the insertion tube (7) is an axially slidable tube (8), which is coupled to the motion of the closure part (2).

19. Fuel tank closure according to claim 6, **characterized in that** the sliding sleeve (5') is mounted in an axially displaceable manner and is displaceable together with the coupling part (1) counter to the action of a spring (10).

20. Fuel tank closure according to claim 6, **characterized in that** the turning ring (4') is biased by a torsion spring (10').

21. Fuel tank closure according to claim 5, **characterized in that** a pressure/suction relief valve (63) is disposed in the side wall of the tubular part (61, 7).

## Revendications

1. Bouchon de réservoir de carburant à fixer sur la goulotte de remplissage de carburant d'un véhicule, muni d'une partie obturante mobile (2) qui, au choix, ouvre ou ferme l'accès à l'intérieur de la goulotte de remplissage de carburant, le bouchon de réservoir de carburant restant posé sur le bord de l'orifice de la goulotte de remplissage de carburant pendant le ravitaillement, également muni d'une pièce de liaison (1) permettant d'actionner la partie obturante (2), muni d'une tubulure de guidage (9), **caractérisé par le fait que** la tubulure de guidage (9) présente une longueur telle qu'elle pénètre dans la goulotte jusqu'à au moins une profondeur au-dessus de laquelle est habituellement disposée une vanne intérieure (120), de façon que la vanne intérieure (120) soit maintenue par la tubulure de guidage (9) en position ouverte.

2. Bouchon de réservoir de carburant selon la revendication 1, **caractérisé par le fait que** la tubulure de guidage (9) présente une section (91) qui se rétrécit en allant vers l'intérieur de la goulotte de remplissage de carburant.

3. Bouchon de réservoir de carburant selon la revendication 2, **caractérisé par le fait que** dans la section (91) qui se rétrécit sont pratiqués des orifices (92).

4. Bouchon de réservoir de carburant selon l'une des revendications 1 à 3, **caractérisé par le fait que** la tubulure de guidage (9) est en acier, au moins dans sa section cylindrique, et présente une épaisseur de paroi comprise entre 0,25 et 0,8 mm.

5. Bouchon de réservoir de carburant selon l'une des revendications précédentes, **caractérisé par le fait que** la partie obturante en position fermée recouvre le bord de l'embouchure d'un tube (61, 7) et qu'elle est munie d'un guidage (21, 62) réalisé de sorte qu'à l'ouverture du bouchon de réservoir de carburant dans une première phase d'ouverture, elle se soulève approximativement dans l'axe du tube (61, 7) et que, dans la deuxième phase du processus d'ouverture, on la tourne perpendiculairement à l'axe du tube (61, 7) au niveau du tube (61, 7) ou de l'axe de sa prolongation axiale, de façon à libérer l'embouchure, la partie obturante (2) étant solidaire de la pièce de liaison (1) qui permet, directement ou indirectement, de guider le déplacement de la partie obturante (2).

6. Bouchon de réservoir de carburant selon la revendication 5, **caractérisé par le fait que** la pièce de liaison (1) est reliée mécaniquement à un anneau de rotation (4, 4') de façon à pouvoir subir une translation axiale par rapport à lui tout en résistant à la rotation.

7. Bouchon de réservoir de carburant selon la revendication 6, **caractérisé par le fait que** l'anneau de rotation (4, 4') muni d'un manchon coulissant (5, 5') est en prise par le biais d'une liaison vissée (51, 41) de sorte que la rotation de l'anneau de rotation (4, 4') entraîne la translation axiale du manchon coulissant (5, 5').

8. Bouchon de réservoir de carburant selon la revendication 7, **caractérisé par le fait que** la partie obturante (2) a la forme d'un capuchon et qu'elle présente deux supports en direction axiale (22) diamétralement opposés et que les supports (22) sont reliés par une liaison à mortaise (23, 52) au manchon coulissant (5, 5').

9. Bouchon de réservoir de carburant selon la revendication 8, **caractérisé par le fait que** le manchon coulissant (5, 5') est relié mécaniquement à la pièce de liaison (1) de façon à être fixe en direction axiale par rapport à la pièce de liaison (1), mais que cette pièce de liaison (1) reste susceptible de pivoter par rapport au manchon coulissant (5, 5').

10. Bouchon de réservoir de carburant selon la revendication 9, **caractérisé par le fait que** les supports (22) enserrent le tube (7, 61) et que le guidage (21, 62) entre les supports (22) et le tube (7, 61) a la forme d'un guide coulissant (21, 62).

11. Bouchon de réservoir de carburant selon la revendication 10, **caractérisé par le fait que** le guide coulissant est un guide tenon / rainure (21, 62).

12. Bouchon de réservoir de carburant selon la revendication 11, **caractérisé par le fait que** la rainure (62) du guide tenon / rainure (21, 62) présente une première section de rainure (621) en direction axiale suivie d'une deuxième section courbée (622), et que le tenon (21) se trouve dans la première section de la rainure (621) lorsque le bouchon de réservoir de carburant est fermé et lors de la première phase de l'ouverture et qu'il se place dans la deuxième section de la rainure (622) lors de la deuxième phase de l'ouverture.

13. Bouchon de réservoir de carburant selon l'une des revendications précédentes, **caractérisé par le fait qu'**un tube (7, 61) est formé d'une bride (6, 6') munie d'une section cylindrique (61) et d'un tube (7) et qu'entre le tube (7) et la section cylindrique (61) entourant le tube est placé un joint à lèvres (8) dépassant la partie de tube ainsi formée au-dessus du bord de l'orifice.

14. Bouchon de réservoir de carburant selon la revendication 13, **caractérisé par le fait que** le tube (7) présente un filetage (71) à visser dans une goulotte de remplissage de carburant (140).

15. Bouchon de réservoir de carburant selon la revendication 13, **caractérisé par le fait que** le tube (7) possède quelques crochets (73) permettant de le fixer dans la goulotte de remplissage de carburant (140) à la manière d'un verrouillage à baïonnette.

16. Bouchon de réservoir de carburant selon la revendication 6, **caractérisé par le fait que** l'anneau de rotation (4, 4') est fixé axialement par rapport à la bride (6, 6') tout en restant susceptible de pivoter par rapport à cette dernière.

17. Bouchon de réservoir de carburant selon la revendication 6, **caractérisé par le fait que** le manchon coulissant (5, 5') est mécaniquement relié à la bride (6, 6') de façon à pouvoir subir une translation axiale par rapport à elle, tout en y étant lié sans pouvoir pivoter.

18. Bouchon de réservoir de carburant selon la revendication 12, **caractérisé par le fait que** dans le tube (7) est disposé un tube poussoir (8) pouvant glisser sur son axe et couplé au déplacement de la partie obturante (2).

19. Bouchon de réservoir de carburant selon la revendication 6, **caractérisé par le fait que** le manchon coulissant (5') est placé de façon à pouvoir effectuer une translation axiale et qu'il peut se déplacer sous l'action d'un ressort (10) en même temps que la pièce de liaison (1).

20. Bouchon de réservoir de carburant selon la revendication 6, **caractérisé par le fait que** l'anneau de rotation (4') est prétendu par un ressort de torsion (10').

21. Bouchon de réservoir de carburant selon la revendication 5, **caractérisé par le fait que** dans la paroi latérale du tube (61, 7) est disposée une valve de surpression/dépression (83).
